(19) Europäisches Patentamt
European Patent Office
Office européen des brevets

(11) Publication number : **0 488 681 A1**

(12) **EUROPEAN PATENT APPLICATION**

(21) Application number : **91310935.1**

(51) Int. Cl.[5] : **C07F 7/10**

(22) Date of filing : **27.11.91**

(30) Priority : **27.11.90 JP 326262/90**

(43) Date of publication of application : **03.06.92 Bulletin 92/23**

(84) Designated Contracting States : **DE FR GB**

(71) Applicant : **SHIN-ETSU CHEMICAL CO., LTD.**
**6-1, Ohtemachi 2-chome**
**Chiyoda-ku Tokyo (JP)**

(72) Inventor : **Shinohara, Toshio**
**777-14, Yawata-machi**
**Takasaki-shi, Gunma-ken (JP)**
Inventor : **Kudo, Muneo**
**3-12-37, Sakuragaoka-ryo, Isobe**
**Annaka-shi, Gunma-ken (JP)**
Inventor : **Matsumura, Kazuyuki**
**3-12-37, Sakuragaoka-ryo, Isobe**
**Annaka-shi, Gunma-ken (JP)**

(74) Representative : **Whalley, Kevin et al**
**MARKS & CLERK 57/60 Lincoln's Inn Fields**
**London WC2A 3LS (GB)**

(54) **N, N-dialkylaminoalkyl-N', N'-dialkylaminodimethylsilane.**

(57) A novel silylation agent for organic synthesis, which is also effective in improving the performance of adhesives for binding an inorganic material with an organic material, namely N,N-dialkylaminoalkyl-N',N'-dialkylaminodimethylsilane represented by the following formula :

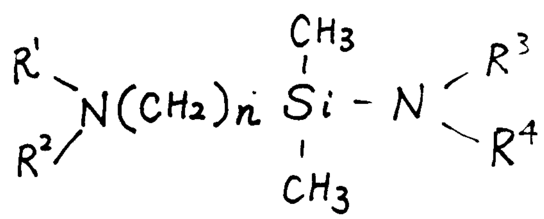

wherein $R^1$, $R^2$, $R^3$ and $R^4$ independently represent alkyls, and n is 1, 2 or 3.

EP 0 488 681 A1

The present invention relates to a novel compound, N, N-dialkylaminoalkyl-N′,N′-dialkylaminodimethylsilane.

There have been quite a few reports on aminoalkylsilanes with an alkoxy group substituted onto a silicon atom; e.g. , aminopropylalkoxysilanes. These aminoalkylsilanes have been used as silylation agents, as primers for photoresists used for semiconductors, and also as agents to improve the performance of adhesives which are used to bind together an organic material and an inorganic material. However, as silylation agents the aminoalkylsilanes want improvement in efficiency since their silicon-oxygen bond is so strong that their reactivity is relatively low. Also, for the similar reason, the aminoalkylsilanes are not necessarily dependable as photoresist primers as well as the adhesive modifiers. As a method for introducing in the molecules a more loose bond than the silicon-oxygen bond so as to increase the reactivity of the molecules, a method has been conceived wherein an amino group is directly substituted onto a silicon atom; however, there has been no report on an aminoalkylsilane wherein an amino group is substituted on a silicon atom.

This invention was contrived in view of the foregoing problems, and it is a primary object of the invention to provide an aminoalkylsilane which performs excellently as a silylation agent for organic synthesis.

A secondary object of the invention is to provide an aminoalkylsilane which excels as an agent to improve the performance of adhesives for binding an inorganic material with an organic material.

A tertiary object of the invention is to provide an aminoalkylsilane which is excellent as a primer for photoresists used for semiconductors.

The inventors, therefore, bent their efforts to synthesize an aminoalkylsilane wherein an amino group is directly bonded to a silicon atom, and as a result, they could formulate N, N-dialkylaminoalkyl-N′,N′-dialkylaminodimethylsilane, and found that this compound is extremely effective as a silylation agent and an adhesive improver; hence the invention.

The above objects were attained by N,N-dialkylaminoalkyl-N′,N′-dialkylaminodimethylsilane which is represented by the following formula:

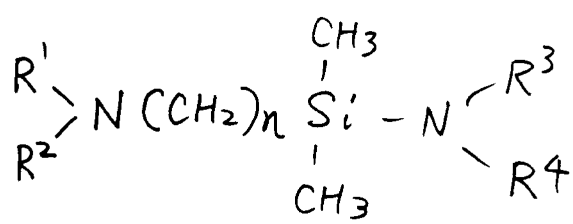

where in $R^1$, $R^2$, $R^3$ and $R^4$ independently represent alkyls of eight carbons or fewer, and n is 1, 2 or 3.

Examples of alkyls for $R^1$, $R^2$, $R^3$ and $R^4$ are methyl, ethyl, propyl, isopropyl, butyl, isobutyl, pentyl, hexyl and octyl.

The N, N-dialkylaminoalkyl-N′,N′-dialkylaminodimethyl-silane of the invention can be formulated in any of the following three syntheses I through III. Throughout the description below of these syntheses, $R^1$, $R^2$, $R^3$ and $R^4$ independently represent the same alkyls selected from the above specimens and the number n is identical.

Synthesis I

An N,N-dialkylallylamine generally represented by

$$R^1R^2NCH_2CH=CH_2$$

is caused to react with an N, N-dialkylaminodimethylsilane generally represented by

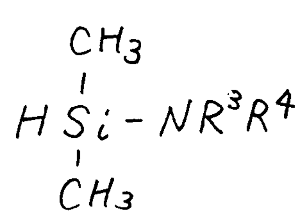

in a reaction mixture which includes no solvent or includes a hydrocarbon solvent, in the presence of a catalyst, under the atmospheric pressure or an elevated pressure (2 - 5 atms), at a temperature between 60 °C and 100 °C, preferably 70 °C and 80 °C, for a time period of three to seventy-two hours during which the reaction mixture is kept stirred.

For each mol of N,N-dialkylaminodimethylsilane, 1 to 1.2 mol of N,N-dialkylallylamine is used in the reaction.

Among others, benzene, toluene, ethylbenzene, *n*-hexane, cyclohexane, and methylcyclohexane have been proved effective as the hydrocarbon solvent. When a solvent is used, it shall be in an amount of 2 - 2.5 weight parts per one weight part of N, N-dialkylaminodimethylsilane.

As the catalyst, a platinum compound, a rhodium compound, and a ruthenium compound, for example, are effective. The amount of the catalyst used is 80 to 150 ppm of the reactants, preferably 100 to 130 ppm thereof.

Synthesis II

An N,N-dialkylallylamine generally represented by

$$R^1R^2NCH_2CH=CH_2$$

is caused to react with chlorodimethylsilane represented by

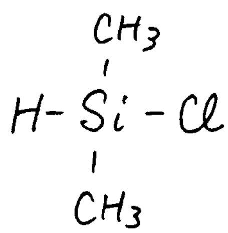

in a reaction mixture which includes no solvent or includes a hydrocarbon solvent, in the presence of a platinic catalyst, under the atmospheric pressure or an elevated pressure (2 - 5 atms), at a temperature between 60 °C and 120 °C, preferably 70 °C and 80 °C, for a time period of three to five hours during which the reaction mixture is kept stirred; as the result, an intermediate product, aminopropyldimethylchlorosilane, is obtained which is represented as follows:

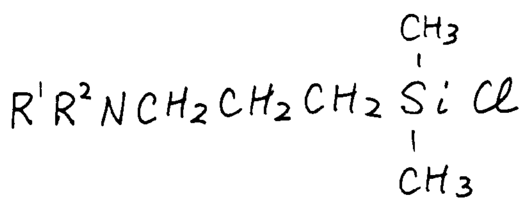

For each mol of chlorodimethylsilane, 1 - 1.2 mol of N,N-dialkylallylamine is used.

The hydrocarbons that can be used as the solvent in this synthesis are the same as those named for synthesis 1. The amount of the platinic catalyst used is from 80 to 150 ppm preferably 100 to 130 ppm, of the reactants. When a solvent is used, it shall be in an amount of 2 - 2.5 weight parts per one weight part of chlorodimethylsilane.

Then, the aminopropyldimethylchlorosilane thus prepared is caused to react with a dialkylamine represented by $HNR^3R^4$ in the presence of a neutralizer at a temperature of 20 °C to 100 °C, preferably at 20 °C to 60 °C in a hydrocarbon solvent, for a time period of two to four hours during which the reaction mixture is kept stirred.

For each mol of aminopropyldimethylchlorosilane, 1 - 1.2 mol of dialkylamine and 1-2 mols, preferably 1 - 1.2 mol, of the neutralizer are used. When a solvent is used, it shall be in an amount of 2 - 3 weight parts per one weight part of chlorodimethylsilane.

As the neutralizer, a tertiary amine such as triethylamine, tripropylamine, tributylamine, and 1,8-diaza-bicyclo[5,4,0]undecene-7 (DBU for short) is possible, but also a dialkylamine itself (a secondary amine) which participates in the reaction as a reactant can perform as the neutralizer as well.

Synthesis III

A dialkylamine represented as $HNR^1R^2$ is caused to react nith a chloroalkyldimethylchlorosilane represented by the following general formula:

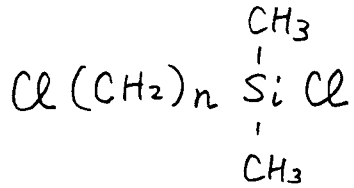

in a reaction mixture which includes no solvent or includes a hydrocarbon solvent, in the presence of a neutralizer, under an elevated pressure (2 - 40 atms), at a temperature between 120 °C and 150 °C, preferably 130 °C and 150 °C, for a time period of 40 to 60 hours during which the reaction mixture is kept stirred.

The neutralizers and the hydrocarbons that can be used as the solvent in this synthesis are the same as those named for synthesis II. However, the amount used must be twice as much as the one used in synthesis II.

The amount of the dialkylamine used in this synthesis III is preferably four to five times as many mols as the chloroalkylchlorodimethylsilane if the dialkylamine itself is used as the neutralizer as well as a reactant, and two to three times as many mols as the chloroalkylchlorodimethylsilane if a different neutralizer is used. When a solvent is used, it shall be in an amount of 2 - 3 weight parts per one weight part of the chloroalkyldimethylchlorosilane.

Having a Si-N bond, which is more active than a Si-O bond in the molecule, an N, N-dialkylaminoalkyl-N′,N′-dialkylaminodimethylsilane of the invention is highly effective as a silylation agent, and for the reason of having a high affinity to surfaces of various materials, this compound is also effective as an adhesive improver.

Examples of possible catalysts for the addition reactions are $(Ph_3P)_4Pt$; toluene solution of $H_2PtCl_6{\cdot}6H_2O$; $(Ph_3P)_3RuCl$; $(Ph_3P)_3RhCl_2$.

As stated above, an N, N-dialkylaminoalkyl-N′,N′-dialkylaminodimethylsilane of the invention is useful as a silylation agent for organic syntheses, as an improver for adhesives to bind inorganic and organic materials together, and especially as a primer for photoresists used for semiconductors.

The invention will be further described in detail in reference to examples, but the invention is not limited to the description of the examples.

Example 1

Thirty grams (0.20 mol) of chloromethylchlorodimethylsilane was mixed with sixty-one grams (0.84 mol) of diethylamine and the mixture was placed in a pressure vessel made of polytetrafluoroethylene; then, a reaction was effected at 130 - 150 °C under a pressure of 7 - 8 atms for 60 hours. From the products an amine salt was removed by filtration, and the filtrate was distilled. A colorless, transparent liquid was obtained as the distillate in an amount of 14 grams.

The boiling point of this liquid was 73 °C at 10 mmHg.

This substance was analyzed by a mass spectrometer and $^1$H-NMR spectrum was taken of it. The result was as follows:

MS(m/z): A parent peak was observed at 216 ($M^+$) for the parent ion; another peak was observed at 144 ($M^+$-$(C_2H_5)_2N$-), which is thought to represent $(C_2H_5)_2N$- which is detached from the parent ion.

$^1$H-NMR (benzene, 60 MHz):

δ: 0.3 (single line, 6H)
δ: 1.1 (triple line, 12H, J = 6Hz)
δ: 2.0 (single line, 2H)
δ: 2.5 (quadruple line, 4H, J = 6Hz)
δ: 2.9 (quadruple line, 4H, J = 6Hz)

It was thus confirmed that the distillate is a diethylaminomethyldiethylaminodimethylsilane represented by the following formula. Incidentally, the yield was 31%.

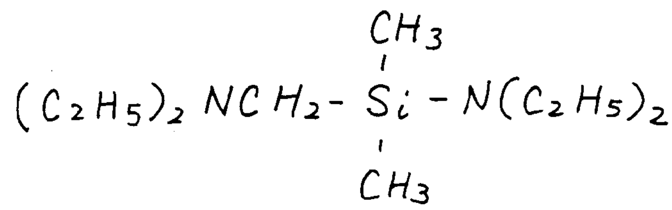

Example 2

Chloroplatinic acid ($H_2PtCl_6 \cdot 6H_2O$) was treated with $NaHCO_3$ to the extent that the Cl/Pt ratio (atomic ratio) became 0.05, and was dissolved in toluene to thereby reduce the chlorine content and a thus modified chloroplatinic acid (hereinafter referred to as "catalyst 1") was obtained of which the platinum content was 0.5 wt%. A mixture consisting of 94.6 g (1.0 mol) of chlorodimethylsilane and 10 g of the catalyst 1 (the net weight of platinum in the catalyst accounted for 130 ppm of the chlorodimethylsilane) was poured into a 300-ml four neck flask equipped with a stirrer, a reflux condenser, a dropping funnel, and a thermometer; then, 93.5 g (1.1 mol) of N,N-dimethylallylamine was added dropwise into the flask via the funnel over the course of 1.5 hour, and a reaction was induced at a temperature of 30 °C. After the dropping, the mixture was matured at 120 °C for 5 hours; thereafter, the mixture was filtered by means of a pressure filter, and the filtrate was distilled. As the result, 65 g (0.35 mol) of 3-dimethylaminopropylchlorodimethylsilane was obtained. The yield was 36 %.

A 500-ml four neck flask equipped with a stirrer, a dry ice methanol trap, and a thermometer was charged with 250 g of tolunene and 53.2 g (0.35 mol) of DBU, and the mixture was cooled down to a temperature of 0 °C; then, 20 g (0.44 mol) of dimethylamine gas was blown through this mixture. Next, a dripping funnel loaded with 62 g (0.35 mol) of the 3-dimethylaminopropylchlorodimethylsilane was fitted to the 500-ml flask, and the load was added dropwise into the flask over the course of one hour, and a reaction was induced at 20 °C. After the dropping, the mixture was matured at 120 °C for two hours; thereafter, the by-product salt was removed by filtration, and the filtrate was distilled. As the result, 34 g of colorless, transparent liquid was obtained.

The boiling point was 50 °C at 5 mmHg.

This substance was analyzed by a mass spectrometer and $^1H$-NMR spectrum was taken of it. The result was as follows:

MS(m/z): 188 ($M^+$)

144 ($M^+$ -$(CH_3)_2N$-)

58 ($M^+$-$(CH_3)_2N$-$(CH_3)_2N(CH_2)_3$-)

$^1H$-NMR (benzene, 60 MHz):

δ: 0.2 (single line, 6H)

δ: 0.8 (multiple line, 2H)

δ: 1.6 (multiple line, 2H)

δ: 2.2 (single line, 8H)

δ: 2.5 (single line, 6H)

It was thus confirmed that the distillate i s a 3-dimethylaminopropyldimethylaminodimethylsilane represented by the following formula. The yield was 51 %.

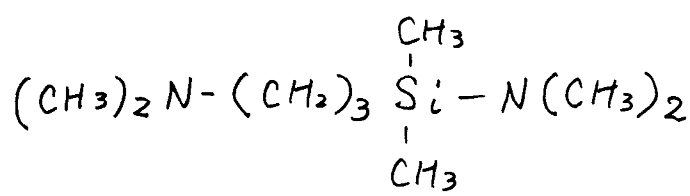

Example 3

Ten grams (0.1 mol) of dimethylaminodimethylsilane was mixed with 8.25 g (0.1 mol) of N,N-dimethylallylamine and 0.8 g of the catalyst 1 (the net weight of platinum in the catalyst accounted for 100 ppm of the reactants ), and the mixture was placed in a pressure vessel made of polytetrafluoroethylene; then, a reaction was conducted at 80 °C under a pressure of 5 atm for 27 hours. As a result, a colorless, transparent liquid was obtained. This product was analyzed in the same manner as in Example 2, and was found to be 3-dimethylaminopropyldimethylaminodimethylsilane. The yield was 27 %.

Example 4

3-chloropropylchlorodimethylsilane was synthesized in exactly the same manner as in Example 2 except that allylchloride was used in place of N,N-dimethylallylamine. Thirty grams (0.18 mol) of this 3-chloropropylchlorodimethylsilane was mixed with fifty-one grams (0.7 mol) of diethylamine, and a reaction was conducted in a pressure vessel made of polytetrafluoroethylene at 130 °C under a pressure of 7 - 8 atm for 29 hours. An amine salt which was produced as a by-product was removed by filtration and the filtrate was distilled; as a result, a colorless, transparent liquid was obtained in an amount of 7. 4 g which had a boiling point of 70 °C at 8 mmHg.

This substance was analyzed by a mass spectrometer and $^1$H-NMR spectrum was taken of it. The result was as follows:

MS(m/z): 172 ($M^+$ -$(C_2H_5)_2N$-)
58 ($M^+$ -$(C_2H_5)_2N$- -$(C_2H_5)_2N(CH_2)_3$-)

$^1$H-NMR (benzene, 60 MHz):

δ: 0.1 (single line, 6H)
δ: 0.6 (multiple line, 2H)
δ: 1.1 (overlapping of triple lines, 12H, J = 6 Hz)
δ: 1.6 (multiple line, 2H)
δ: 2.5 (multiple line, 10H)

It was thus confirmed that the distillate is a 3-diethylaminopropyldiethylaminodimethylsilane represented by the following formula. The yield was 20 %.

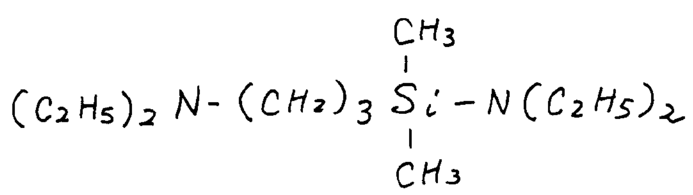

An example of Application

A solution was prepared by mixing 50 volume parts of diethylaminomethyldiethylaminodimethylsilane with 50 volume parts of trifluorotrichloroethane. A substrate made of silicon dioxide was steeped in this mixture solution; then, by the spin coating method the $SiO_2$ substrate was coated with a film of diethylaminoethyldiethylaminodimethylsilane. A widely used photoresist made of a novolak resin was applied to this substrate by the spin coating method; thereafter, a resist layer is formed by the bake treatment.

Thus prepared substrate was exposed to light and developed; then, it was treated in an etchant. The photoresist was so fastly stuck to the oxide surface that no peeling or other failure of sticking was observed during this etching treatment.

## Claims

**1.** N, N-dialkylaminoalkyl-N′,N′-dialkylaminodimethylsilane which is represented by the following formula:

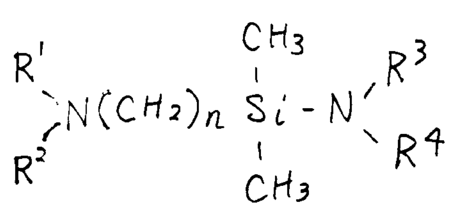

wherein $R^1$, $R^2$, $R^3$ and $R^4$ independently represent alkyls of eight carbons or fewer, and n is 1, 2 or 3.

European Patent Office

# EUROPEAN SEARCH REPORT

Application Number

EP 91 31 0935

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | JOURNAL OF ORGANOMETALLIC CHEMISTRY<br>vol. 61, 1973,<br>pages 133 - 145;<br>GROBE, J. ET AL: 'ALTERNATIV-LIGANDEN, II. DARSTELUNG VAN CHELAT-LIGANDEN DES TYPS (CH3)2XSI(CH3)2CH2X(CH3)2 (X=N UND/ODER P)'<br>* the whole document *<br>--- | 1 | C07F7/10 |
| X | ZHURNAL OBSHCHEI KHIMII<br>vol. 52, no. 2, 1982,<br>pages 362 - 370;<br>PERCHENKO, V.N. ET AL: '.BETA.-(ORGANOSILYL) AMINES'<br>* the whole document *<br>--- | 1 | |
| X | CHEMICAL ABSTRACTS, vol. 69,<br>1968, Columbus, Ohio, US;<br>abstract no. 77337X,<br>ZHINKIN, D.YA. ET AL: 'AMINOLYSIS OF POLYFUNCTIONAL (CHLOROALKYL)CHLOROSILANES'<br>page 7238 ;<br>* abstract *<br>& ZH. OBSHCH. KHIM.<br>vol. 38, no. 4, 1968,<br>pages 900 - 902;<br>--- | 1 | TECHNICAL FIELDS SEARCHED (Int. Cl.5 )<br>C07F |
| X | CHEMICAL ABSTRACTS, vol. 79,<br>1973, Columbus, Ohio, US;<br>abstract no. 42602J,<br>NAMETKIN, N.S. ET AL: 'REACTIONS OF SECONDARY AND TETRIARY TRIORGANO-.BETA.-AMINOETHYLSILANES'<br>page 370 ;<br>* abstract *<br>& IZV. AKAD. NAUK. SSSR, SER. KHIM.<br>no. 4, 1973,<br>pages 865 - 870;<br>--- | 1 | |
| A | EP-A-0 074 001 (BAYER AG)<br>* the whole document * | 1 | |

The present search report has been drawn up for all claims

| Place of search | Date of completion of the search | Examiner |
|---|---|---|
| THE HAGUE | 05 FEBRUARY 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)